# EUROPÄISCHE PATENTSCHRIFT

(11) **EP 4 569 310 B1**
(45) Veröffentlichungstag und Bekanntmachung des Hinweises auf die Patenterteilung: **29.04.2026**
(21) Anmeldenummer: 23813059.5
(22) Anmeldetag: 27.10.2023
(51) Int. Cl.: G01N 21/05, G01N 21/65, G01N 21/85, G01N 21/15

(54) **SONDE ZUR FLÜSSIGKEITS-ANALYSE**
PROBE FOR ANALYSING A LIQUID
SONDE POUR L'ANALYSE D'UN LIQUIDE

(30) Priorität: 04.11.2022 DE 102022129251
(43) Veröffentlichungstag der Anmeldung: 18.06.2025
(73) Patentinhaber: Watergenics GmbH, 10967 Berlin (DE)
(72) Erfinder: MANTESCU, Liviu, 12099 Berlin (DE)
(74) Vertreter: Castell, Klaus
(86) Internationale Anmeldenummer: PCT/IB2023/060846
(87) Internationale Veröffentlichungsnummer: WO 2024/095115

(56) Entgegenhaltungen:
- WO-A1-2012/152423
- WO-A1-2018/138304
- WO-A1-2021/198032
- CN-U- 214 622 284
- DE-A1- 102019 131 698
- US-A1- 2013 081 447
- US-A1- 2014 211 197
- US-A1- 2017 284 930
- US-B1- 10 352 865

## Beschreibung

Die Erfindung betrifft eine Sonde zur laufenden Flüssigkeits-Analyse, aufweisend mindestens einen Detektor zum Messen der spektralen Eigenschaften der zu analysierenden Flüssigkeit, und ein flüssigkeitsdichtes Gehäuse zur Aufnahme des mindestens einen Detektors, wobei der mindestens eine Detektor in dem flüssigkeitsdichten Gehäuse aufgenommen ist, und wobei in der Wandung des flüssigkeitsdichten Gehäuses mindestens ein Fenster angeordnet ist, durch welches hindurch der mindestens eine Detektor spektrale Eigenschaften der zu analysierenden Flüssigkeit detektiert, wobei das flüssigkeitsdichte Gehäuse mit einem Strömungskanal verbunden ist, durch welchen die zu analysierende Flüssigkeit strömt, und wobei das mindestens eine Fenster in den Strömungskanal gerichtet ist.

Zur laufenden Flüssigkeits-Analyse, dem sogenannten Online-Monitoring, sind Durchflussküvetten bekannt, durch die hindurch die spektroskopisch zu untersuchende Flüssigkeit strömt. Solche Durchflussküvetten werden im Labor oder in einem Technikum verwendet, um beispielsweise in chemischen, kontinuierlichen Verfahren die Zusammensetzung einer Flüssigkeit oder einen speziellen Substanzgehalt zu analysieren. Auch im Bereich der Klärtechnik werden Durchflussküvetten verwendet um das Klärgut und das geklärte Wasser laufend zu beobachten.

Einen speziellen Fall stellt die laufende Beobachtung von Grubenwasser dar. Grubenwasser liegt in stillgelegten Gruben vor und das Grubenwasser wird mit Pumpen stets auf einem identischen Niveau gehalten. Fällt das Niveau ab, so kann Grundwasser in die sich allmählich leerende Grube strömen. Steigt das Niveau zu hoch, so kann Grubenwasser ins Grundwasser sickern und dort Grundwasser mit Schwermetallen aus tieferen Gesteinsschichten ins Grundwasser einbringen. Die Nivellierung des Grubenwassers ist eine Ewigkeitsaufgabe. Um sicher zu stellen, dass kein Grundwasser mit Grubenwasser vermengt wird, wird das Grubenwasser und auch das umliegende Grundwasser ständig analysiert. Aus dem Grubenwasser können Chloride, Schwermetalle, Nitrate, und auch Immissionen aus einst in Gruben verbrachten Sondermülls an die Oberfläche gelangen. Nicht alle dabei zu beobachtenden Immissionen sind einer laufenden Analyse durch spektroskopische Methoden zugänglich oder aber sie sind nur einer apparativ sehr empfindlichen spektroskopischen Methode zugänglich, wie beispielsweise der Raman-Spektroskopie. Die apparative Empfindlichkeit der Messinstrumente und die sehr rauen Bedingungen zum Monitoring von Grubenwasser sind dabei ein herausforderndes Problem.

Zum Online-Monitoring von Grubenwasser mit Hilfe der Raman-Spektroskopie ist es notwendig, in das zu überwachende Grubenwasser einen Laserstrahl zu richten und die durch den Raman-Effekt zurückgeworfene Raman-Emission zu messen. Das anregende Laserlicht und die Raman-Emission haben dabei um mehrere Größenordnungen unterschiedliche Intensitäten. Da die Raman-Emission eine andere Wellenlänge hat als die Anregungswellenlänge, lässt sich die monochrome Laserstreuung durch Partikel von der Raman-Emission durch Beugungsgitter in dem Raman-Spektrometer voneinander trennen. Vagabundierendes Licht, zum Beispiel vagabundierendes Sonnenlicht, das im Wellenlängenbereich der Raman-Emission liegt, lässt sich nicht mehr von der eigentlichen Raman-Emission trennen. Es ist also notwendig, das durch ein Raman-Spektrometer fließende Grubenwasser vor Fremdlicht geschützt fließen zu lassen. Ein weiteres Problem, das sich ergibt ist, dass ein Fenster, das das zu untersuchende Grubenwasser vom Raman-Spektrometer voneinander trennt, schon nach kurzer Zeit entweder veralgt oder aber durch Niederschläge aus dem Wasser vergilbt oder gar vollkommen undurchsichtig wird. Ablagerungen können Eisenoxid oder andere Schwermetalloxide sein, Kalkablagerungen und Bakterienbewuchs. Die Apparatur muss also den rauen Bedingungen in einer Grube standhalten, vor Fremdlicht geschützt das Grubenwasser an einem Fenster für ein Spektrometer vorbeiführen und das Fenster muss sich reinigen lassen können, ohne dabei Schaden zu nehmen und ohne, dass die Sonde dafür manuell gereinigt werden muss, denn die Anzahl von Sonden in einem Grubengebiet ist zu hoch, um jede eingesetzte Sonde oder jedes eingesetzte Raman-Spektrometer innerhalb der Zeit zu reinigen, in der Bewuchs oder Ablagerungen entstehen können.

Sehr ähnliche Verhältnisse in Bezug auf die Veralgung und die Ablagerungen liegen vor in Abwässern von Agrarbetrieben, wie beispielsweise in Gülle, Abwässern aus Gärgruben in biologischen Gaserzeugungsanlagen, aber auch in der Wasserwirtschaft, in industriellen und kommunalen Kläranlagen, sowie in Wasserkreisläufen von industriellen Kühltürmen, um nur einige Beispiele zu nennen. Solche laufend zu überwachende Flüssigkeiten haben gemein, dass sie eine Veralgung, einen Bakterienbewuchs oder eine Ablagerung von Inhaltsstoffen auslösen. Solche Flüssigkeiten werden im Rahmen dieser Anmeldung als stoffbelastete Flüssigkeiten bezeichnet.

In der US-Patentanmeldung US 2014/0211197 A1 wird eine Durchflussküvette offenbart, in welcher die Durchflussküvette einen bogenförmigen Kanal ausbildet.

In der internationalen Patentanmeldung WO 2012/152423 A1 wird ein Einmal-Sensorkopf zur Analyse von Flüssigkeiten offenbart, in welchem Flüssigkeit durch eine Durchflussküvette strömt. Dabei sind die Zugänge zur Küvette gegenüber der Ebene des Küvettenfensters angewinkelt.

In der US-Patentanmeldung US 2017/284930 A1 wird eine spektroskopische Anordnung mit einer U-Rohr-förmigen Küvette offenbart.

In dem US-Patent US 10,352,865 B1 wird eine Vorrichtung zur photometrischen Analyse von Flüssigkeiten offenbart. Eine darin vorhandene Durchflussküvette hat einen Kanal, in dem die zu analysierende Flüssigkeit mehrfach ihre Flussrichtung ändert.

In der internationalen Patentanmeldung WO2021/198032 A1 wird eine Messvorrichtung zur Bestimmung der Beschaffenheit von Gasen offenbart. Darin ist eine helikale Kapillare vorgesehen, die einen Hohlraum zur Aufnahme von Sensoren umschließt.

In der deutschen Offenlegungsschrift DE 10 2029 131 698 A1 wird ein System zur Analyse von Flüssigkeiten offenbart. Darin ist ein spiralförmiger Kanal für Flüssigkeiten mit einem Aergoel umgeben, um resonantes Licht aus dem spiralförmigen Kanal auszukoppeln.

In der internationalen Patentanmeldung WO 2018/138304 A1 wird eine gedruckte Durchflusszelle für ein Spektrphotometer offenbart. Dies weist einen mehrfach einen Bogen aufweisenden Kanal für die Flüssigkeiten auf, wobei an den Bögen Detektoren für die spektroskopische Untersuchung angeordnet sind.

Aufgabe der Erfindung ist es, eine Sonde zur laufenden Flüssigkeitsanalyse zur Verfügung zu stellen, die den rauen Bedingungen in stoffbelasteten Flüssigkeiten und standhält, die vor Fremdlicht geschützt die stoffbelastete Flüssigkeit an einem Spektrometer vorbeiführt und das sich leicht reinigen lässt.

Die erfindungsgemäße Aufgabe wird durch eine Sonde mit den Merkmalen nach Anspruch 1 gelöst. Weitere vorteilhafte Ausgestaltungen sind in den Unteransprüchen zu Anspruch 1 angegeben.

Nach dem Gedanken der Erfindung ist also vorgesehen, dass der Strömungskanal gewunden ist. Überraschender Weise hat sich herausgestellt, dass eine gewundene Form des Strömungskanals einerseits dazu führt, dass beispielsweise in die Flüssigkeit eintauchendes Laserlicht durch Raman-Emission in ausreichender Weise zurück emittiert wird. Auf der anderen Seite ist ein Fenster zum Strömungskanal vor Fremdlicht, insbesondere vor Sonnenlicht geschützt. Durch das entlang der Windung strömen, entsteht in der Flüssigkeit eine starke Verwirbelung, die eine Veralgung oder eine Ablagerung von in der stoffbelasteten Flüssigkeit vorhandenen Stoffen verlangsamt.

Die so gestaltete Sonde eignet sich für unterschiedliche Arten von spektroskopischen Untersuchungen. Hier ist auf sämtliche optische Spektroskopie-Arten zu verweisen, wie UV/VIS-Spektroskopie, IR-/NIR-Spektroskopie, Messung der Lichtstreuung, Polarimetrie und Messung des Brechungsinxdex. Besonders geeignet ist die Sonde mit dem gewundenen Strömungskanal für spektroskopisches Online-Monitoring durch Raman-Spektroskopie. Dazu ist in Ausgestaltung der erfindungsgemäßen Sonde vorgesehen, dass der Detektor ein Raman-Spektrometer ist und dass durch mindestens ein Fenster ein Laserstrahl in die zu analysierende Flüssigkeit leuchtet.

Erfindungsgemäß ist die Form für den gewundenen Strömungskanal eine helikale Form. Neben der helikalen Form sind andere, dreidimensional gewundene Formen des Strömungskanals möglich, fallen aber nicht unter die beanspruchte Erfindung. Die exakte Form des helikalen Strömungskanals kann unterschiedlich ausgestaltet sein.

Es ist vorgesehen, dass die helikale Form des Strömungskanals über ihren Verlauf eine variierende Windung aufweist, wobei die variierende Windung kontinuierlich variiert. Der Begriff "Windung" ist hier im mathematisch-differentialgeometrischen Sinne zu verstehen. Die Windung einer Helix beschreibt die Torsion und die Krümmung. Variiert die Windung, so handelt es sich nicht um eine gleichmäßige Helix, sondern die Krümmung und die Torsion der Helix variiert. Durch die Variation der Krümmung wird erreicht, dass die Strömung ein gleichmäßiges parabolisches Geschwindigkeitsprofil innerhalb des Lumens des Strömungskanals ausbildet. Diese Vergleichmäßigung führt dazu, dass Kavitationseffekte vermieden werden, die mit der Zeit den Strömungskanal und ein in den Strömungskanal gerichtetes Fenster oberflächlich abtragen. Auch werden eine Veralgung und eine Ablagerung von gelösten Stoffen verlangsamt.

Für den Strömungskanals ist es vorgesehen, dass die helikale Form des Strömungskanals eine sowohl variierende Umlaufzahl entlang ihrer Achse als auch einen variierenden Durchmesser der Helix aufweist. Diese Ausgestaltung verstärkt den Effekt der radialen Beschleunigung der den Strömungskanal durchströmenden Flüssigkeit. Der Beschleunigungseffekt wirkt einer Veralgung und einer Ablagerung von gelösten Stoffen stark entgegen. Es in Ausgestaltung des Strömungskanals auch möglich, dass die helikale Form des Strömungskanals eine konstante Umlaufzahl entlang ihrer Achse bei variierendem Durchmesser der Helix aufweist. Auch durch diese Form wird die Radialbeschleunigung beim Einströmen verstärkt.

Erfindungsgemäß ist vorgesehen, dass sowohl der Helix-Durchmesser als auch die Windung variieren. Es ist also möglich, dass die helikale Form des Strömungskanals (115) eine sowohl variierende Umlaufzahl entlang ihrer Achse (A) als auch einen variierenden Durchmesser (d_{H}) der Helix (H) aufweist.

Um Fremdlicht sicher auszuschließen, sollte die Windung des Strömungskanals mindestens eine halbe Umdrehung aufweisen. Die helikale Form des Strömungskanals kann also zwischen 0,5 (180°) und sechs Umläufen (1.080°) umfassen. Es ist möglich, noch mehr Umläufe auszubilden. Dann aber stellen sich zu hohe Druckverluste für eine gleichmäßige Strömung im Strömungskanal bei geringem Anströmungsdruck von 1 mBar bis 50 mBar ein.

Um die Sonde für Grubenwasser nutzen zu können, sollte der Durchmesser des Strömungskanals nicht zu gering sein, um den Druckverlust nicht zu groß werden zu lassen, und auch, um den Strömungskanal reinigen zu können. Es hat sich als vorteilhaft herausgestellt, wenn der Strömungskanal ein Verhältnis von Durchmesser des Strömungskanals zu Länge zwischen 0,5% und 5% aufweist und der Durchmesser des Strömungskanals zwischen 2 mm und 2 cm liegt. Diese Werte haben sich für die Viskosität von Grubenwasser als günstig zur Vermeidung der Veralgung und Ablagerung und andererseits zur leichten Durchströmbarkeit gegeben.

Um den Strömungskanal zu reinigen, ist eine Düse vorgesehen, die in den Strömungskanal mündet, durch welchen Reinigungsflüssigkeit in den Strömungskanal einströmbar ist. So kann die Sonde mit einem Klarwasserschlauch verbunden werden, der regelmäßig durch die Düse den Strömungskanal mit Klarwassere oder mit einer Reinigungsflüssigkeit durchströmt. Dabei kann ein ferngesteuertes Ventil eine Reinigung auslösen.

Die Erfindung wird anhand der folgenden Figuren näher erläutert. Es zeigt:
- Fig. 1: eine Skizze einer geöffneten Sonde in einer perspektivischen Ansicht,
- Fig. 2: die geöffnete Sonde aus Figur 1 in teils transparenter Ansicht,
- Fig. 3: die geöffnete Sonde aus Fig. 1 in einer Ansicht von oben,
- Fig. 4: die geöffnete Sonde aus Fig. 1 in teils transparenter in weiterer Perspektive,
- Fig. 5: Darstellung von prinzipiellen Formen eines Strömungskanals in der Sonde.

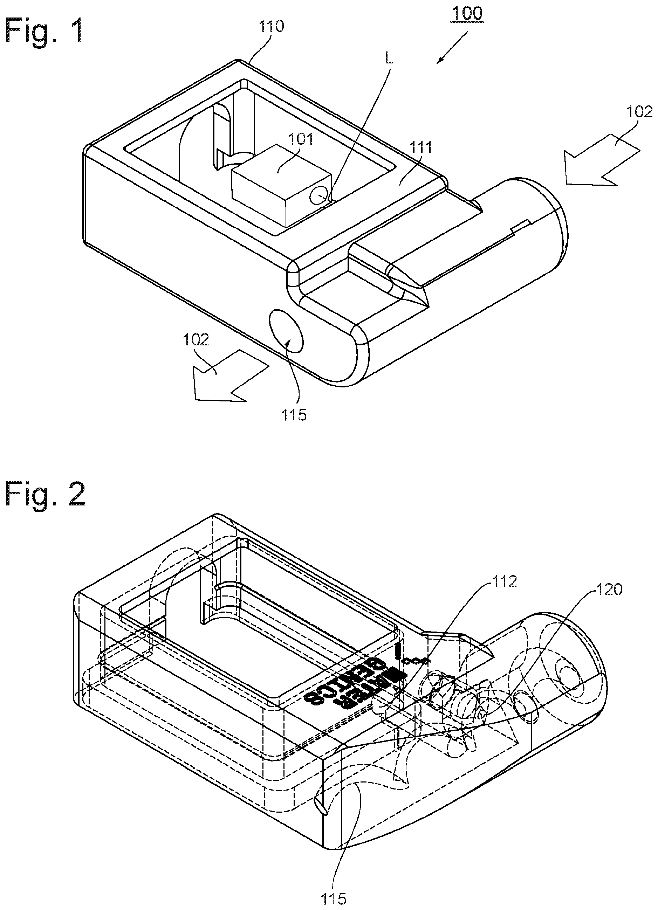

In **Figur 1** ist eine Skizze einer geöffneten Sonde 100 in einer perspektivischen Ansicht gezeigt. Die in dieser Ausführungsform dargestellte Sonde 100 besteht aus einem flüssigkeitsdichten Gehäuse 110 zur Aufnahme des Detektors 101, wobei der Detektor 101 zum Messen der spektralen Eigenschaften einer zu analysierenden Flüssigkeit 102 vorgesehen ist. In der Wandung 111 des flüssigkeitsdichten Gehäuses 110 befindet sich ein Fenster 112 (Figur 2) durch welches hindurch der Detektor 101 spektrale Eigenschaften der zu analysierenden Flüssigkeit 102 detektiert. Dazu strömt die zu analysierende Flüssigkeit 102 durch einen in dem Gehäuse angeordneten Strömungskanal 115 und das zuvor genannte Fenster ist für den Detektor 101 zur Flüssigkeit 102 gerichtet. Die hier gezeigte Ausführungsform der Sonde 100 weist genau einen Detektor 101 auf. Dieser Detektor ist ein Raman-Spektrometer, welches einen Laserstrahl L durch das Fenster 112 in die zu analysierende Flüssigkeit 102 richtet und dabei das Spektrum der dabei erzeugten Raman-Streuung misst. Es ist aber auch möglich, dass mehr als ein Detektor in der Sonde 100 vorliegt. Diese Detektoren können sich ein Fenster 112 teilen oder aber je ein eigenes dem jeweiligen Detektor zugewiesenes Fenster teilen. Die hier gezeigte Ausführungsform der Sonde 100 ist dazu gedacht, in Grubenwasser eingetaucht zu werden und dort für eine längere Zeit zu verweilen, um die Grubenwasserqualität zu überwachen. Aufgabe dieser Sonde ist es, die zu analysierende Flüssigkeit 102 an dem Fenster 112 vorbeizuführen, ohne dass einerseits vagabundierendes Fremdlicht, zum Beispiel Sonnenlicht, zum Detektor 101 gelangt und auch ohne, dass vagabundierendes Laserlicht des Laserstrahls L nach außen gelangt. Um das Vagabundierende Licht abzuschirmen, ist es nach dem Gedanken der Erfindung vorgesehen, dass der Strömungskanal 115 gewunden ist. Durch die gewundene Form des Strömungskanals 115 wird der Laserstrahl L in eine Strahlungsfalle geschickt und auch von außen anliegendes Licht, wie zum Beispiel Sonnenlicht, kann den Windungen nicht folgen und zum Detektor gelangen. Da die Sonde für längere Zeit in der zu analysierenden Flüssigkeit, hier in Grubenwasser eingetaucht bleiben soll, ist eine Düse 120 vorgesehen, durch die eine Reinigungsflüssigkeit in den Strömungskanals einströmbar ist. Die Reinigungsflüssigkeit kann unter hohem Druck eingepresstes, klares Wasser sein. Es ist aber auch möglich, ein spezielles Reinigungsfluid mit Detergentien oder mit chemisch Verunreinigungen auflösenden Substanzen zu versehen, wie zum Beispiel stark oxidierende Beimengungen, wie Hypochloride oder Peroxide.

In **Figur 2** ist die geöffnete Sonde aus Figur 1 in teils transparenter Ansicht dargestellt. In dieser Ansicht ist das Fenster 112 in der Wandung 111 des Gehäuses 110 sichtbar, das vom Innenraum der Sonde 100 zum gewundenen Strömungskanal 115 der Sonde 100 führt. Neben dem durch die transparente Darstellung gezeigten Fenster 112 ist auch die Düse 120 sichtbar, durch die Reinigungsflüssigkeit in den Strömungskanal einströmbar ist. Die Reinigungsflüssigkeit strömt durch die Düse 120 ein entweicht aus dem Strömungskanal 115 durch die Pforten, durch die die zu analysierende Flüssigkeit in die Sonde einströmt und wider herausströmt.

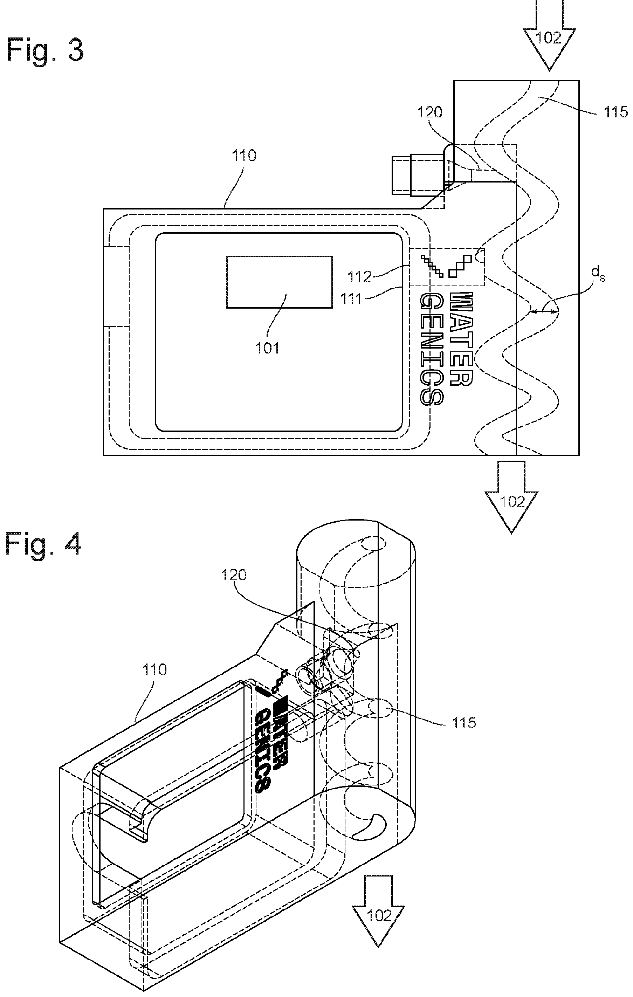

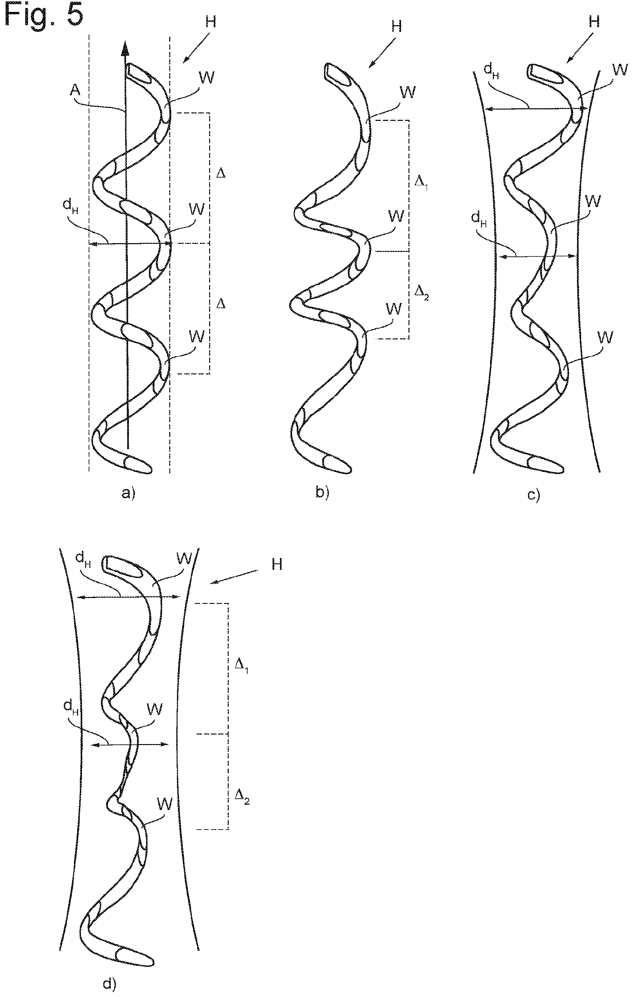

Um den gewundenen Charakter des Strömungskanals zu zeigen, ist in **Figur 3** die geöffnete Sonde aus Fig. 1 in einer Ansicht von oben skizziert. Die hier gezeigte transparente, zweidimensionale Darstellung zeigt den gewundenen Strömungskanal 115 als scheinbar nur in zwei Dimensionen mäandrierenden Kanal. Tatsächlich aber ist der Kanal helikal geformt und bildet so einzelne Windungen W (Figur 5) aus.

Der helikale Charakter des Strömungskanals 115 geht aus **Figur 4** deutlich hervor. Figur 4 zeigt die geöffnete Sonde aus Fig. 1 in teils transparenter in weiterer Perspektive, so dass die einzelnen Windungen W als dreidimensionaler Weg im Verlauf des Strömungskanals 115 verfolgbar sind. Die Düse 120 befindet sich neben dem Teil der Sonde 100, in dem der Detektor 101 aufgenommen ist. An die Düse 120 ist ein Reinigungsschlauch anschließbar.

In **Figur 5** ist schließlich eine Darstellung von verschiedenen prinzipiellen Formen eines Strömungskanals 115 in der Sonde 100 aufgezeigt. Der Strömungskanal 115 kann, in einem nicht erfindungsgemäßen Beispiel, wie in der Unterfigur a) gezeigt, einen gleichmäßig helikalen Verlauf haben. In dem gleichmäßigen Verlauf ist der Windungsabstand Δ zwischen zwei Windungen W konstant. Der Windungsabstand Δ ist die Weglänge entlang der Achse A, um die sich die Windung W bei einer vollen Umdrehung um 360° windet. In dieser Verlaufsform ist der Durchmesser d_{H} der Helix beziehungsweise der einzelnen Windungen W konstant und die Helix H weist eine konstante Windung im mathematisch-differentialgeometrischem Sinne auf.

In der Unterfigur b) ist ein weiterer nicht erfindungsgemäßer Verlauf eines Strömungskanals 115 in Form der hier gezeigten Helix H gezeigt. In diesem Verlauf ist der Durchmesser d_{H} der Helix beziehungsweise der einzelnen Windungen W konstant, jedoch verändert sich der Windungsabstand Δ kontinuierlich, so dass ein erster Windungsabstand Δ₁ zwischen zwei Windungen W größer ist als ein zweiter Windungsabstand Δ₂ zwischen zwei weiteren Windungen W. Dabei geschieht die Änderung der Windung der Helix H im mathematisch-differentialgeometrischem Sinne kontinuierlich und diese wechselt nicht abrupt.

In der Unterfigur c) ist ein weiterer nicht erfindungsgemäßer Verlauf eines Strömungskanals 115 in Form der hier gezeigten Helix H gezeigt. In diesem Verlauf ist der Durchmesser d_{H} der Helix beziehungsweise der aufeinander folgenden Windungen nicht konstant, sondern durchläuft ein Minimum. Der Windungsabstand Δ hingegen bleibt konstant, so dass Windungsabstand Δ zwischen zwei Windungen W gleich bleibt. Die Veränderung des Durchmesser d_{H} der Helix beziehungsweise der aufeinander folgenden Windungen geschieht kontinuierlich und geschieht nicht abrupt.

In der Unterfigur d) ist schließlich ein erfindungsgemäßer Verlauf eines Strömungskanals 115 in Form der hier gezeigten Helix H gezeigt. In diesem Verlauf ist weder der Durchmesser d_{H} der Helix beziehungsweise der einzelnen Windungen W konstant, noch ist der Windungsabstand Δ kontinuierlich, so dass ein erster Windungsabstand Δ₁ zwischen zwei Windungen W größer ist als ein zweiter Windungsabstand Δ₂ zwischen zwei weiteren Windungen W.

### BEZUGSZEICHENLISTE

| | | | |
|---|---|---|---|
| 100 | Sonde | A | Achse |
| 101 | Detektor | d_{H} | Durchmesser (Helix) |
| 102 | Flüssigkeit | d_{S} | Durchmesser (Strömungskanal) |
| 110 | Gehäuse | Δ | Windungsabstand |
| 111 | Wandung | Δ₁ | Windungsabstand |
| 112 | Fenster | | |
| 115 | Strömungskanal | Δ₂ | Windungsabstand |
| | | L | Laserstrahl |
| 120 | Düse | W | Windung |

## Patentansprüche

1. Sonde (100) zur laufenden Flüssigkeits-Analyse, aufweisend
- mindestens einen Detektor (101) zum Messen der spektralen Eigenschaften der zu analysierenden Flüssigkeit (102),
- einen gewundenen Strömungskanal (115), und
- ein flüssigkeitsdichtes Gehäuse (110) zur Aufnahme des mindestens einen Detektors (101),
- wobei der mindestens eine Detektor (101) in dem flüssigkeitsdichten Gehäuse (110) aufgenommen ist, und wobei
- in der Wandung (111) des flüssigkeitsdichten Gehäuses (110) mindestens ein Fenster (112) angeordnet ist, durch welches hindurch der mindestens eine Detektor (101) spektrale Eigenschaften der zu analysierenden Flüssigkeit (102) detektiert,
- wobei das flüssigkeitsdichte Gehäuse (110) mit dem Strömungskanal (115) verbunden ist, durch welchen die zu analysierende Flüssigkeit (102) strömt, und
- wobei das mindestens eine Fenster (112) in den Strömungskanal (115) gerichtet ist,
**dadurch gekennzeichnet, dass**
der Strömungskanal (115) eine helikale Form aufweist, und
die helikale Form des Strömungskanals (115) eine sowohl variierende Umlaufzahl entlang ihrer Achse (A) als auch einen variierenden Durchmesser (d_{H}) der Helix (H) aufweist.

2. Sonde nach Anspruch 1,
**dadurch gekennzeichnet, dass**
der Detektor (101) ein Raman-Spektrometer ist und dass durch das mindestens eine Fenster einein Laserstrahl (L) in die zu analysierende Flüssigkeit (102) leuchtet.

3. Sonde nach Anspruch 1 oder 2,
**dadurch gekennzeichnet, dass**
die helikale Form des Strömungskanals (115) über ihren Verlauf eine variierende Windung (W) aufweist, wobei die variierende Windung (W) kontinuierlich variiert.

4. Sonde nach Anspruch 1 oder 2,
**dadurch gekennzeichnet, dass**
die helikale Form des Strömungskanals (115) zwischen 0,5 (180°) und sechs Umläufen (1.080°) umfasst.

5. Sonde nach einem der Ansprüche 1 bis 4,
**dadurch gekennzeichnet, dass**
der Strömungskanal (115) ein Verhältnis von Durchmesser (d_{S}) des Strömungskanals (115) zu Länge zwischen 0,5% und 5% aufweist und der Durchmesser (d_{S}) des Strömungskanals (115) zwischen 2 mm und 2 cm liegt.

6. Sonde nach einem der Ansprüche 1 bis 4,
**dadurch gekennzeichnet, dass**
eine Düse (120) in den Strömungskanal (115) mündet, durch welchen Reinigungsflüssigkeit in den Strömungskanal (115) einströmbar ist.

## Claims

1. A probe (100) for continuous liquid analysis, comprising
- at least one detector (101) for measuring the spectral properties of the liquid (102) to be analyzed,
- a winding flow channel (115), and
- a liquid-tight housing (110) for receiving the at least one detector (101),
- wherein the at least one detector (101) is received in the liquid-tight housing (110), and wherein
- at least one window (112) is arranged in the wall (111) of the liquid-tight housing (110), through which the at least one detector (101) detects spectral properties of the liquid (102) to be analyzed,
- wherein the fluid-tight housing (110) is connected to the flow channel (115) through which the liquid (102) to be analyzed flows, and
- wherein the at least one window (112) faces the flow channel (115),
**characterized in that**
the flow channel (115) has a helical shape, and
the helical shape of the flow channel (115) has both a varying number of turns along its axis (A) and a varying diameter (d_{H}) of the helix (H).

2. The probe according to claim 1,
**characterized in that**
the detector (101) is a Raman spectrometer and that a laser beam (L) shines through the at least one window (112) into the liquid (102) to be analyzed.

3. The probe according to claim 1 or 2,
**characterized in that**
the helical shape of the flow channel (115) has a varying winding (W) along its length, wherein the varying winding (W) varies continuously.

4. The probe according to claim 1 or 2,
**characterized in that**
the helical shape of the flow channel (115) comprises between 0.5 (180°) and six turns (1,080°).

5. The probe according to one of the claims 1 to 4,
**characterized in that**
the flow channel (115) has a ratio of the diameter (d_{S}) of the flow channel (115) to its length of between 0.5% and 5%, and the diameter (d_{S}) of the flow channel (115) is between 2 mm and 2 cm.

6. The probe according to one of the claims 1 to 4,
**characterized in that**
a nozzle (120) opens into the flow channel (115), through which cleaning liquid can be introduced into the flow channel (115).

## Revendications

1. Sonde (100) pour l'analyse en continu d'un liquide, comprenant
- au moins un détecteur (101) pour la mesure des propriétés spectrales du liquide (102) à analyser,
- un canal d'écoulement sinueux (115), et
- un boîtier étanche aux liquides (110) pour recevoir l'au moins un détecteur (101),
- où l'au moins un détecteur (101) est reçu dans le boîtier étanche aux liquides (110), et où
- au moins une fenêtre (112) est disposée dans la paroi (111) du boîtier étanche aux liquides (110), à travers laquelle l'au moins un détecteur (101) détecte des propriétés spectrales du liquide à analyser (102),
- où le boîtier étanche aux liquides (110) est relié au canal d'écoulement (115) par lequel s'écoule le liquide à analyser (102), et
- où l'au moins une fenêtre (112) est orientée vers le canal d'écoulement (115),
**caractérisée en ce que**
le canal d'écoulement (115) présente une forme hélicoïdale, et la forme hélicoïdale du canal d'écoulement (115) présente à la fois un nombre de tours variable le long de son axe (A) et un diamètre (d_{H}) variable de l'hélice (H).

2. Sonde selon la revendication 1,
**caractérisée en ce que**
le détecteur (101) est un spectromètre Raman et **en ce qu'**un faisceau laser (L) éclaire le liquide à analyser (102) à travers l'au moins une fenêtre (112).

3. Sonde selon la revendication 1 ou 2,
**caractérisée en ce que**
la forme hélicoïdale du canal d'écoulement (115) présente un enroulement (W) variable sur toute sa longueur, où cet enroulement (W) varie de manière continue.

4. Sonde selon la revendication 1 ou 2,
**caractérisée en ce que**
la forme hélicoïdale du canal d'écoulement (115) comprend entre 0,5 tour (180°) et six tours (1 080°).

5. Sonde selon l'une des revendications 1 à 4,
**caractérisée en ce que**
le canal d'écoulement (115) présente un rapport entre le diamètre (ds) du canal d'écoulement (115) et la longueur compris entre 0,5 et 5 %, et **en ce que** le diamètre (ds) du canal d'écoulement (115) est compris entre 2 mm et 2 cm.

6. Sonde selon l'une des revendications 1 à 4,
**caractérisée en ce qu'**
une buse (120) débouche dans le canal d'écoulement (115), par laquelle un liquide de nettoyage peut être introduit dans le canal d'écoulement (115).
